# EUROPÄISCHE PATENTSCHRIFT

(11) **EP 0 349 899 B1**
(45) Veröffentlichungstag und Bekanntmachung des Hinweises auf die Patenterteilung: **01.12.1993**
(21) Anmeldenummer: 89111814.3
(22) Anmeldetag: 29.06.1989
(51) Int. Cl.: C03B 9/353, C03B 9/16

(54) **Halter für die Hälften mehrerer Formen einer IS-Maschine zur Herstellung von Hohlglasartikeln**
Support for the valves of several moulds of an IS machine for making hollow glass objects
Support pour les moitiés de plusieurs moules d'une machine I.S. pour la fabrication d'objets creux en verre

(30) Priorität: 08.07.1988 DE 3823152
(43) Veröffentlichungstag der Anmeldung: 10.01.1990
(73) Patentinhaber: RUHRGLAS GmbH, 45329 Essen (DE)
(72) Erfinder: Mehling, Hans, D-4300 Essen 12 (DE); Schommartz, Peter, D-4300 Essen 16 (DE); Wolter, Joachim, D-4390 Gladbeck (DE)
(74) Vertreter: Spalthoff, Adolf, Dipl.-Ing.

(56) Entgegenhaltungen:
- EP-A- 0 255 329
- EP-A- 0 323 034
- EP-A- 0 345 933
- US-A- 3 278 290
- US-A- 3 607 207

## Beschreibung

Die Erfindung bezieht sich auf einen Halter für die Formhälften einer Vor- und/oder Fertigform einer IS-Maschine zur Herstellung von Hohlglasartikeln nach dem Oberbegriff des Patentanspruchs 1.

Aus der EP-A-0255329 ist ein derartiger Halter bekannt, der zwei Träger aufweist, die jeweils mit den Formhälften versehen sind. Beide Träger sind unter Öffnung bzw. Schließung der Form voneinander weg- bzw. zueinander hinbewegbar. Hierzu sind beide Träger verschwenkbar auf einer ihnen gemeinsamen Schwenkachse angelenkt. Einer der beiden Träger hat zwei zueinander verschwenkbare Wippen, so daß Unebenheiten an den Anlageflächen der Formhälften der Vor- bzw. Fertigform in einer die Formhälften querenden Richtung ausgeglichen werden können.

Ausgehend von dem vorstehend geschilderten Stand der Technik liegt der Erfindung die Aufgabe zugrunde, den gattungsgemässen Halter derart weiterzubilden, daß nicht nur ein Ausgleich von Unebenheiten in der x-Achse der Vor- bzw. Fertigform sondern auch ein derartiger Ausgleich in der y-Achse der Vor- bzw. Fertigform möglich ist.

Diese Aufgabe wird erfindungsgemäß durch die Merkmale im kennzeichnenden Teil des Patentanspruchs 1 gelöst. Durch die einen um eine waagerechte Achse schwenkbar angeordneten Ausgleichhebel aufweisende Ausgleicheinrichtung wird sichergestellt, daß die Andruckkraft der Formhälften über deren gesamte vertikale Erstreckung weitgehend konstant ist. Dies wird wie folgt bewerkstelligt:

Beim Zusammenfahren der Formhälften kommt es vor, daß z.B. der obere Abschnitt derjenigen Formhälfte, die an dem Träger mit der Ausgleicheinrichtung angeordnet ist, früher gegen den oberen Abschnitt der an dem anderen Träger angeordneten Formhälfte anschlägt als der untere Abschnitt dieser am Träger mit Ausgleicheinrichtung angeordneten Formhälfte. Wenn nun die Form weiter geschlossen wird, wird der untere Abschnitt dieser Formhälfte weiter in Richtung auf den unteren Abschnitt der anderen Formhälfte zubewegt. Dies hat eine Verschwenkung des Ausgleichhebels um dessen waagerechte Achse zur Folge; aufgrund dieser Verschwenkung des Ausgleichhebels um seine waagerechte Achse erfährt der obere Teil dieser Formhälfte eine Bewegung in Gegenrichtung zu der Bewegung des unteren Teils dieser Formhälfte. Aufgrund dieser voneinander abhängigen gegensinnigen Bewegung des oberen und des unteren Abschnitts dieser Formhälfte wird erreicht, daß der Andruck, mit dem die beiden Formhälften gegeneinander gedrückt werden, um die Form zu schließen, weitgehend konstant ist. Des weiteren wird eine Verformung der an dem mit der Ausgleicheinrichtung versehenen Träger angeordneten Formhälfte weitestgehend vermieden. Mittels der im kennzeichnenden Teil des Patentanspruchs 1 angegebenen Merkmale ist es somit möglich, insbesondere bei vergleichsweise hohen Glasformen auch einen Ausgleich in der y-Achse derselben durchzuführen, was insgesamt zu einer Verbesserung der Qualität der herzustellenden Hohlglasartikel führt.

Aus der US-A-3 278 290 ist ein zweiteiliger Halter bekannt, bei dem ein zuverlässiges Schließen der Form dadurch erreicht wird, daß eine Formhälfte an einem Halter angeordnet ist, dessen oberes Teil in bezug auf das untere Teil relativ verschwenkbar ist. Zum Schließen der Form werden die beiden Formhälften zusammengefahren. Sobald z.B. der obere Abschnitt der an dem geteilten Halter angeordneten Formhälfte gegen den oberen Abschnitt der an dem einteiligen Halter angeordneten Formhälfte anliegt, wird zwischen den oberen Abschnitten der beiden Formhälften die Andruckkraft stetig erhöht, wenn zum Schließen der Form auch in deren unterem Abschnitt die unteren Abschnitte der beiden Formhälften weiter aufeinander zubewegt werden. Eine tendenzielle Zurückbewegung des oberen Abschnitts der an dem geteilten Halter angeordneten Formhälfte findet nicht statt. Vielmehr wird die an dem zweigeteilten Halter angeordnete Formhälfte solange verformt, bis die Form über ihre gesamte Vertikalerstreckung mit ausreichendem Andruck geschlossen ist. Es kann im Falle des zweiteiligen Halters gemäß US-A-3 278 290 jedoch keineswegs ausgeschlossen werden, daß der Andruck zwischen den beiden Formhälften zwischen den oberen Abschnitten der Formhälften beträchtlich größer ist als zwischen den unteren Abschnitten der Formhälften. Ein derartiger ungleichmäßiger Andruck ergibt sich, weil eine Fortsetzung der Schließbewegung des unteren Abschnitts der an dem zweiteiligen Halter angeordneten Formhälfte nicht zu einem gleichzeitig stattfindenden Zurückschwenken des oberen Abschnitts dieser an dem zweiteiligen Halter angeordneten Formhälfte führt.

In einer vorteilhaften Ausführungsform der Erfindung ist der erste Träger mit der Ausgleicheinrichtung versehen, der die ersten Formhälften aufweist, so daß hinreichend Raum zur Unterbringung der Ausgleicheinrichtung zur Verfügung steht. Es ist jedoch auch möglich, den zweiten Träger mit der Ausgleicheinrichtung auszurüsten, der die schwenkbar gelagerten Wippen aufweist. In diesem Falle ist die Ausgestaltung derart, daß die Wippen nicht nur wie bisher eine Schwenkbewegung um ihre senkrechten Achsen ausführen können, sondern auch zusätzlich noch an ihren oberen und unteren Enden jeweils um eine waagerechte Achse.

Bei einer weiteren vorteilhaften Ausführungsform der Erfindung sind bei dem Träger jeweils zwei voneinander beabstandete Rahmenplatten od.dgl. vorhanden, in denen ein Zentrierbolzen schwenkbar gelagert ist, welcher einen senkrecht zu diesem vorragenden Arm od.dgl. trägt, an dem parallel zum Zentrierbolzen der Ausgleichhebel schwenkbar angeordnet ist, der an seinen beiden Enden mit der oberen und der unteren Abdeckplatte od.dgl. schwenkbar verbunden ist, an denen jeweils die oberen und die unteren Enden der Formhälften befestigt sind. Durch diese Ausgestaltung läßt sich in konstruktiv einfacher Weise der angestrebte Ausgleich von Unebenheiten auch in der y-Achse der Glasformen bewerkstelligen.

Die Öffnungs- und Schließbewegungen der beiden Träger des Halters erfolgen in herkömmlicher Weise entweder senkrecht zur Teilungsebene der Formen gegenläufig, also parallel zueinander, oder um eine gemeinsame Schwenkachse nach Art einer Schere.

Ein Ausführungsbeispiel der Erfindung ist an Hand der Zeichnung näher erläutert, und zwar zeigt:

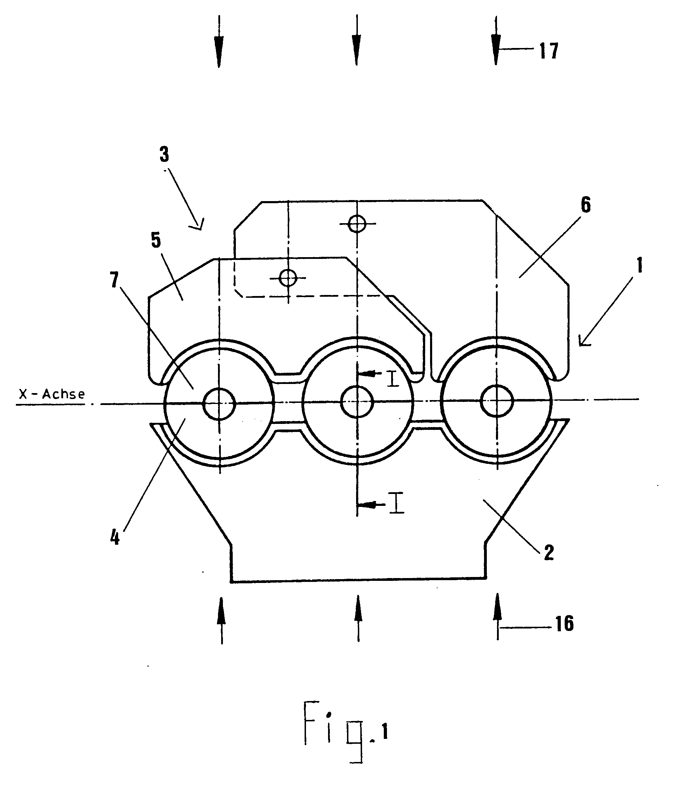

- Figur 1: eine Draufsicht eines Halters und
- Figur 2: einen Teilschnitt gemäß der Linie I - I der Figur 1.

Mit 1 ist der Halter bezeichnet, welcher aus den beiden Trägern 2, 3 besteht. Der Träger 2 ist mit ersten Formhälften 4 - im vorliegenden Falle drei - ausgerüstet. Der andere Träger 3 weist zwei einander zugeordnete, schwenkbare Wippen 5, 6 auf, welche mit zweiten Formhälften 7 der Formen versehen sind.

Der Träger 2 ist mit einer Ausgleicheinrichtung ausgerüstet. Zu diesem Zwecke sind bei dem Träger 2 jeweils zwei voneinander beabstandete Rahmenplatten 8 vorhanden, in denen ein Zentrierbolzen 9 mit seinem oberen und unteren Ende schwenkbar gelagert ist. Der Zentrierbolzen 9 trägt einen senkrecht zu diesem vorragenden Arm 10, an dem parallel zu diesem ein Ausgleichhebel 11 schwenkbar angeordnet ist. Der Ausgleichhebel 11 ist an seinen beiden Enden mit je einer oberen und unteren Abdeckplatte 12, 13 schwenkbar verbunden. An der oberen Abdeckplatte 12 sind die oberen Enden 14 der ersten Formhälften 4 und an der unteren Abdeckplatte 13 deren untere Enden 15 befestigt.

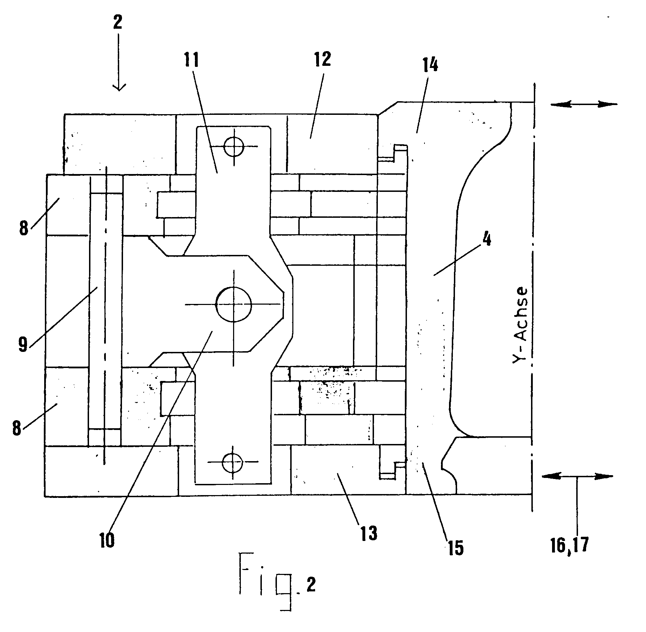

Wie insbesondere aus Figur 2 ersichtlich, ist über die Ausgleicheinrichtung 9, 10, 11 auch ein Ausgleich in der y-Achse möglich, wohingegen die Wippen 5, 6 nur einen Ausgleich in der x-Achse zulassen.

Das dargestellte Ausführungsbeispiel der Halters ist für eine Parallelverschiebung der beiden Träger 2, 3 in Richtung der Pfeile 16, 17 zum Öffnen und Schließen der Formen eingerichtet, jedoch ist auch eine Lagerung der beiden Träger 2, 3 um eine gemeinsame Schwenkachse nach Art einer Schere möglich.

## Patentansprüche

1. Halter (1) für die Formhälften (4, 7) einer Vor- und/oder Fertigform einer IS-Maschine zur Herstellung von Hohlglasartikeln, welcher aus zwei Trägern (2, 3) besteht, deren erster (2) mit den ersten Formhälften (4) ausgerüstet ist und deren zweiter (3) zwei einander zugeordnete schwenkbare Wippen (5, 6) aufweist, welche mit den zweiten Formhälften (7) der Vor- und/oder Fertigform versehen sind, wobei die Träger (2, 3) derart angebracht sind, daß zwischen diesen zum Öffnen und Schließen ihrer einander zugeordneten Formhälften (4, 7) eine Relativbewegung erfolgt, dadurch gekennzeichnet, daß ein Träger (2, 3) mit einer Ausgleicheinrichtung (9, 10, 11) ausgerüstet ist, zu der ein um eine waagerechte Achse schwenkbar angeordneter Ausgleichhebel (11) gehört, an dessen oberem und unterem Ende entsprechend der Anzahl der Formhälften (4, 7) obere und untere Abdeckplatten (12, 13) angebracht sind, die mittels Verschwenkung des Ausgleichhebels (11) um dessen waagerechte Achse in gegenseitiger Abhängigkeit zueinander bewegbar sind, wobei an den oberen Abdeckplatten (12) die oberen Enden (14) der Formhälften (4, 7) und an den unteren Abdeckplatten (13) die unteren Enden (15) der Formhälften (4, 7) befestigt sind.

2. Halter nach Anspruch 1, dadurch gekennzeichnet, daß der erste Träger (2) mit der Ausgleicheinrichtung (9, 10, 11) versehen ist, welche die ersten Formhälften (4) aufweist.

3. Halter nach Anspruch 1 oder 2, dadurch gekennzeichnet, daß bei dem Träger (2) jeweils zwei voneinander beabstandete Rahmenplatten (8) vorhanden sind, in denen ein Zentrierbolzen (9) schwenkbar gelagert ist, welcher einen senkrecht zu diesem vorragenden Arm (10) trägt, an dem parallel zum Zentrierbolzen (9) der Ausgleichhebel (11) schwenkbar angeordnet ist, welcher an seinen beiden Enden mit der oberen und unteren Abdeckplatte (12, 13) schwenkbar verbunden ist.

4. Halter nach einem der Ansprüche 1 bis 3, bei welchem die beiden Träger (2, 3) senkrecht zur Teilungsebene der Formen gegenläufig verschiebbar angeordnet sind.

5. Halter nach einem der Ansprüche 1 bis 3, bei welchem die beiden Träger (2, 3) um eine gemeinsame Achse schwenkbar angeordnet sind.

## Claims

1. Holder (1) for the mould halves (4, 7) of a blank mould and/or a finishing mould of an IS-machine for the production of hollow glass articles, which consists of two supports (2, 3), of which the first (2) is equipped with the first mould halves (4) and of which the second (3) comprises two pivotable rockers (5, 6) which are associated with one another and are provided with the second mould halves (7) of the blank mould and/or the finishing mould, wherein the supports (2, 3) are mounted in such a way that between them they perform a relative movement to open and close their mould halves (4, 7) which are associated with one another, characterised in that one support (2, 3) is equipped with an equalisation device (9, 10, 11), which comprises an equalisation lever (11) which is disposed so as to be pivotable about a horizontal axis and on the upper and lower ends of which lever there are mounted upper and lower cover plates (12, 13) corresponding to the number of mould halves (4, 7), which cover plates are moveable in mutual dependence on one another about the horizontal axis of the equalisation lever (11) by means of the pivoting of the equalisation lever, wherein the upper ends (14) of the mould halves (4, 7) are secured to the upper cover plates (12) and the lower ends (15) of the mould halves (4, 7) are secured to the lower cover plates (13).

2. Holder according to Claim 1, characterised in that the first support (2) is provided with the equalization device (9, 10, 11), which comprises the first mould halves (4).

3. Holder according to Claim 1 or Claim 2, characterised in that in the case of the support (2) there are provided two frame plates (8) at a distance from one another in each case, in which a centring pin (9) is pivotably mounted, which pin supports an arm (10) projecting perpendicular thereto, on which there is pivotably mounted, parallel to the centring pin (9), the equalisation lever (11), which is pivotably connected at both its ends to the upper and the lower cover plate (12, 13).

4. Holder according to any one of Claims 1 to 3, in the case of which the two supports (2, 3) are disposed displaceable in opposite directions and perpendicular to the dividing plane of the moulds.

5. Holder according to any one of Claims 1 to 3, in the case of which the two supports (2, 3) are disposed so as to be pivotable about a common axis.

## Revendications

1. Support (1) pour les moitiés (4, 7) d'un moule ébaucheur et/ou finisseur d'une machine IS destinée à la fabrication d'articles creux en verre, formé de deux porte-moules (2, 3) parmi lesquels le premier (2) porte les premières moitiés de moule (4) et le second présente deux berceaux (5, 6) pivotants mutuellement associés qui portent les deuxièmes moitiés (7) du moule ébaucheur et/ou finisseur, les porte-moules (2, 3) étant montés de manière telle qu'il y ait un déplacement relatif entre eux pour l'ouverture et la fermeture des moitiés de moule (4, 7) associées, caractérisé par le fait qu'un porte-moule (2, 3) est équipé d'un dispositif de compensation (9, 10, 11) comportant un balancier compensateur (11) qui est monté pivotant autour d'un axe horizontal et aux extrémités supérieure et inférieure duquel sont montées des plaques de fermeture (12, 13) supérieure et inférieure qui, par pivotement du balancier compensateur (11) autour de son axe horizontal, peuvent être déplacées en relation réciproque, les extrémités supérieures (14) des moitiés de moule (4, 7) étant fixées aux plaques de couverture (12) supérieures et les extrémités inférieures (15) des moitiés de moule (4, 7) étant fixées aux plaques de couverture inférieures (13).

2. Support selon la revendication 1, caractérisé par le fait que le premier porte-moule (2) est muni du dispositif de compensation (9, 10, 11) qui comporte les premières moitiés de moule (4).

3. Support selon la revendication 1 ou 2, caractérisé par le fait que le porte-moule (2) comporte deux plaques de base (8) distantes l'une de l'autre, dans lesquelles un axe de centrage (9) est monté pivotant, lequel axe de centrage porte un bras (10) qui fait saillie perpendiculairement par rapport à lui, sur lequel le balancier compensateur (11) est monté pivotant, lequel balancier compensateur à ses deux extrémités est lié avec possibilité de pivotement avec les plaques de couvertures (12, 13) inférieure et supérieure.

4. Support selon l'une des revendications 1 à 3 dans lequel les deux porte-moules (2, 3) sont disposés de manière à pouvoir se déplacer en translation dans des directions opposées, perpendiculairement à au plan de joint des moules.

5. Support selon l'une des revendications 1 à 3 dans lequel les deux porte-moule (2, 3) sont montés avec possibilité de pivotement autour d'un axe commun.
